# EUROPÄISCHE PATENTSCHRIFT

(11) **EP 3 784 892 B1**
(45) Veröffentlichungstag und Bekanntmachung des Hinweises auf die Patenterteilung: **16.10.2024**
(21) Anmeldenummer: 19717869.2
(22) Anmeldetag: 12.04.2019
(51) Int. Cl.: F02D 41/00, F02B 27/02, F02B 29/02, F02D 11/10

(54) **VERFAHREN ZUM BETREIBEN EINES VERBRENNUNGSMOTORS**
METHOD FOR OPERATING A COMBUSTION ENGINE
PROCÉDÉ DE FONCTIONNEMENT D'UN MOTEUR DE COMBUSTION

(30) Priorität: 23.04.2018 DE 102018206202
(43) Veröffentlichungstag der Anmeldung: 03.03.2021
(73) Patentinhaber: VOLKSWAGEN AKTIENGESELLSCHAFT, 38440 Wolfsburg (DE)
(72) Erfinder: JESCHKE, Jens, 38106 Braunschweig (DE); REBOHL, Thorsten, 38527 Meine (DE)
(86) Internationale Anmeldenummer: PCT/EP2019/059400
(87) Internationale Veröffentlichungsnummer: WO 2019/206675

(56) Entgegenhaltungen:
- EP-A1- 2 128 400
- DE-A1- 102010 061 859
- US-A1- 2002 121 266
- US-A1- 2015 275 772
- US-B1- 6 311 679

## Beschreibung

Die vorliegende Erfindung betrifft ein Verfahren zum Betreiben eines Verbrennungsmotors, insbesondere eines Kraftfahrzeugs.

Verbrennungsmotoren werden mobil, insbesondere bei Straßenfahrzeugen, aber auch bei Luft- und Wasserfahrzeugen eingesetzt sowie stationär für Antriebsaggregate oder zur Energieerzeugung (Kraft-Wärmekopplungseinrichtung).

Ein Verbrennungsmotor umfasst in der Regel einen Motorblock mit einem oder meist mehreren Zylindern mit hubverstellbaren Kolben (sog. Kolbenmotoren bzw. Hubkolbenmotoren). Die Gaswechselvorgänge in den Zylindern bzw. im Brennraum werden mit Einlass- und Auslassventilen (Gaswechselventile) gesteuert. Zur Frischluftversorgung ist ein Frischluftsystem vorgesehen, welches die Zylinder mit Frischluft versorgt. Typischerweise umfasst ein Frischluftsystem einen Frischluftkanal, einen Frischluftverteiler, von dem einzelne Frischluftrohre zu jeweils einem Zylinder führen.

Das Abgassystem ist ähnlich aufgebaut, die Abgasströme der einzelnen Zylinder werden über einen Abgaskrümmer gesammelt und über einen Abgaskanal ausgestoßen.

Bei modernen Motoren sind Frischluftsystem und Abgassystem mechanisch und strömungstechnisch eng miteinander verzahnt. Über Abgasturbolader wird ein Teil der Abgasenergie genutzt, um die zugeführte Frischluft zu verdichten, die Abgasströme selbst können über eine Hochdruckabgasrückführung direkt in den Frischluftstrom abgezweigt werden, in gleicher Weise können auch die einer Abgasnachbehandlung unterzogenen Abgasströme (z.B. Abgaskatalysator, Rußfilter, Stickoxidreduktion) der Frischluft zugeführt werden (Niederdruckabgasrückführung). Sowohl im Frischluftsystem als auch im Abgassystem treten bei Kolbenmaschinen Druckpulsationen auf, die durch die Verbrennungszyklen beim zyklischen Betrieb des Hubkolbenmotors mit den typischen Phasen (Bsp. 4-Takt) Einlassen, Komprimieren, Verbrennen und Auslassen m Zylinder verursacht werden. Dazu gehören auch zyklische Kurzschlüsse des Brennraums zum Frischluft- und Abgassystem während Einlassen und Auslassen und damit verbundene Gasmassentransporte und Druckausgleiche zwischen den kurzgeschlossenen Teilabschnitten.

Zur Steuerung der Abgas- und Frischluftströme sind unterschiedliche periphere Aktoren vorgesehen. Damit werden im Zusammenhang mit dieser Anmeldung insbesondere Klappen und Ventile wie z.B. die Drosselklappe, VTG-Schaufelwegverstellung (für Turbolader mit verstellbarer Turbinengeometrie), ATL-Wastegate-Ventile, Hochdruckabgasrückführungsventile und Niederdruckabgasrückführungsventile bezeichnet. Diese Aktoren dienen dazu, die vom Motor angesaugte Gasmasse und deren Zusammensetzung aus Frischluft und Abgas einzustellen. Die VTG-Schaufelwegverstellung dient beispielsweise dazu, einen Ladedruck einzustellen, die Drosselklappenverstellung regelt den Saugrohrdruck und damit die angesaugte Gasmenge, ein Abgasrückführungsventil stellt einen rückgeführten AGR-Massenstrom ein und verändert damit die Qualität (Zusammensetzung) und die Quantität (Druck, Temperatur) der dem Brennraum (Zylinder) zugeführten Gasmasse.

Die angesaugte Gasmasse (beschrieben durch Druck, Temperatur und Zusammensetzung) bestimmt entscheidend die Qualität des Verbrennungsprozesses hinsichtlich des Verbrauches und der resultierenden Emissionen. Beispielsweise werden über die Drosselklappe und die VTG-Stellung das Druckniveau im Saugrohr und im Abgaskrümmer verstellt. Diese beiden Drücke beeinflussen unmittelbar die resultierenden Ladungswechselverluste des Verbrennungsmotors und damit auch den Verbrauch.

Die sog. Spüldifferenz zwischen diesen beiden Drücken ermöglicht überhaupt eine Abgasrückführung. Die Qualität und die Menge des rückgeführten Abgases beeinflusst die Emissionen als wichtigen zweiten Zielparameter. Die Abgasrückführung kann dabei sowohl intern über die Ladungswechselsteuerorgane (Frisch- und Abgasventile), aber auch ergänzt über Abgasrückführungsventile in der Motorperipherie eingestellt werden.

Die oben erwähnten Druckpulsationen entstehen durch den Arbeitstakt des Verbrennungsmotors und setzen sich in der Peripherie des Motors fort. Damit variieren über den Arbeitstakt aller Zylinder die Drücke und Massenströme auch in den peripheren Bereichen des Abgassystems und des Frischluftsystems. Diese Pulsationen verändern sich entsprechend den Betriebszuständen des Verbrennungsmotors. Die Aktoren werden in Bezug auf die Pulsationen und im Hinblick auf einen bestimmten Betriebszustand quasi stationär eingestellt, das heißt, sie verändern sich nicht hinsichtlich der Druck- und Volumenpulsationen.

Es gibt Ansätze, bei denen die Frischluftzufuhr nicht nur betriebszustandsabhängig, sondern verbrennungstaktsynchron optimiert werden soll. Damit ist es im Prinzip möglich, die Frischluftzufuhr nicht nur global, sondern einzeln für jeden Zylinder zu optimieren und anzugleichen. In der DE 10 2010 061 859 A1 ist dazu ein Ansatz beschrieben, bei dem die Frischluftanlage ein Zusatzventil aufweist, das in einem Frischluftkanal angeordnet ist und so betrieben wird, dass sich Öffnungsphasen, in denen das Zusatzventil den Frischluftkanal öffnet und Schließphasen, in denen das Zusatzventil den Frischluftkanal schließt, abwechseln, wobei die Öffnungsphasen abhängig von einem aktuellen Betriebszustand der Brennkraftmaschine variiert werden, um diese Öffnungsphasen an den aktuellen Betriebszustand anzupassen. Die Anpassung der Öffnungsdauer erfolgt über eine Variation des Schließzeitpunkts dieser Öffnungsphase in Abhängigkeit seiner Phasenlage zum Kurbelwellenwinkel. Damit ist es möglich, die Frischluftzufuhr kurbelwellenwinkelabhängig und gegebenenfalls auch zylinderindividuell einzustellen. Der Ansatz erfordert jedoch ein Zusatzventil, welches zusätzlich zu den bereits vorhandenen oben angegebenen Aktoren erforderlich ist. Das in der DE 10 2010 061 859 angegebene Zusatzventil beruht auf einem Rotationsprinzip, bei dem die Variation stark eingeschränkt ist. Zum einen kann ein solches Ventil nur in "auf" und "zu" eingestellt werden und der Hubverlauf ist nur in engen Grenzen beeinflussbar. Ebenfalls sind die Zeitpunkte für "auf" und "zu" nur in engen Grenzen variierbar. Ein weiteres Beispiel für ein Motorsteuerungssystem ist im Dokument US 2015/275772 dargestellt.

Aufgabe der vorliegenden Erfindung ist es, ein Verfahren zum Betreiben eines Verbrennungsmotors bereitzustellen, bei dem die oben genannten Nachteile wenigstens teilweise überwunden werden. Eine weitere Aufgabe kann darin gesehen werden, einen Verbrennungsmotor und ein Fahrzeug bereitzustellen, die geeignet sind, entsprechend einem solchen Verfahren betrieben zu werden.

Diese Aufgabe wird durch das erfindungsgemäße Verfahren nach Anspruch 1, den Verbrennungsmotor nach Anspruch 9 und das Fahrzeug nach Anspruch 10 gelöst. Weitere vorteilhafte Ausgestaltungen der Erfindung ergeben sich aus den Unteransprüchen und der folgenden Beschreibung bevorzugter Ausführungsbeispiele der vorliegenden Erfindung. Das erfindungsgemäße Verfahren zeichnet sich dadurch aus, dass bei wenigstens einem der peripheren Aktoren (siehe oben) neben einer zeitlich mittleren - nachfolgend global benannten - Aktorstellung, die im Hinblick auf einen erfassten Betriebszustand des Verbrennungsmotors eingestellt wird, zusätzlich eine zeitlich relative Aktorvariation ermittelt wird und die globale Aktorstellung um diese relative Aktorvariation verändert wird. Dabei erfolgt die relative Aktorvariation verbrennungstaktsynchron derart, dass eine mittels der Aktorvariation bewirkte Veränderung der Druckpulsation, insbesondere im Frischluftsystem und/oder im Abgassystem, eine Gasmenge bzw. Wunschgasmenge und/oder eine -zusammensetzung im Zylinder, im Frischluftsystem und/oder im Abgassystem verbrauchs- und/oder emissionsminimierend einstellt. Es geht also letztlich darum, durch eine verbrennungstaktsynchrone Relativstellungsaufschaltung um eine betriebspunktabhängige mittlere (globale) Stellung der Aktoren n der Peripherie des Motors die Druckpulsationen zu verändern, um damit die Zielparameter des Verbrennungsprozesses (geringerer Verbrauch, geringere Emissionen) auf ein insgesamt verbessertes Niveau zu heben, da so die Prozesse zylinderindividuell verbessert, angepasst und gleichgestellt werden können.

Diese so realisierte dynamische Ansteuerung erlaubt eine weitere Optimierung des Verbrennungsprozesses, die mit den klassischen Methoden (WT, Brennverfahrensentwicklung) nicht ohne weiteres realisierbar ist.

Wird das Verfahren zur optimierten Einstellung und Koordination eines oder mehrerer Aktoren genutzt, sind geringere Kraftstoffverbräuche und reduzierte Emissionen durch Nutzung der sowieso vorhanden Freiheitsgrade des Systems realisierbar. Die verbrennungstaktsynchrone Ansteuerung der Aktoren (Klappen und Ventile) erlaubt außerdem eine Gleichstellung und Optimierung der Arbeitsprozesse in den einzelnen Zylindern (insbesondere hinsichtlich der angesaugten Gasmenge und deren Zusammensetzung).

So kann beispielsweise eine Optimierung über die verbrennungstaktsynchrone Steuerbarkeit der Abgasrückführungsventile (Hochdruckabgasrückführung, interne Abgasrückführung über die Gaswechselventile und Niederdruckabgasrückführung) durch die Erzeugung bedarfsgerechter Druckgefälle zwischen Abgaskrümmer und Einlasssammler realisiert werden. Die Kombination aus mittlerer Position eines Aktors (globale Aktorstellung) und einem relativen Verlauf (relative Aktorvariation) ermöglicht die Weiternutzung der bestehenden Motorsteuerungsverfahren und deren Ergänzung, um die verbrennungsmotorsynchrone Ansteuerung, auf die ggf. wahlweise auch verzichtet werden kann.

In einer Ausgestaltung des erfindungsgemäßen Verfahrens ist der jeweilige periphere Aktor als eine Drosselklappe, ein Hochdruckabgasrückführungsventil, ein Niederdruckabgasrückführungsventil, eine VTG-Verstellung und/oder eine Abgasklappe ausgebildet. Diese Aktoren beeinflussen maßgeblich Druck und Zusammensetzung der einzelnen Gasströme im Frischluftsystem und im Abgassystem. Über einen oder mehrere dieser Aktoren lässt sich die Kopplung dieser Systeme (mechanisch und strömungstechnisch) optimieren.

In einer anderen Weiterbildung des Verfahrens umfasst die relative Aktorvariation einen relativen Sollverlauf, der über ein verbrennungstaktsynchron eingeprägtes Ansteuersignal, insbesondere einen verbrennungstaktsynchron eingeprägten Momentenverlauf des Aktuators beschrieben werden kann. Dabei kann es sich um ein Verstellmoment oder einen Verstellmomentverlauf handeln. Diese Ausführung ist besonders für elektrisch bzw. elektromotorisch angesteuerte Aktoren vorteilhaft. Ein verbrennungstaktsynchrones Verstellmoment bzw. ein relativer Momentenverlauf vereinfacht die energetische Bewertung des Aufwands zur Verstellung, ohne dass dabei hinsichtlich der Güte (Stellgenauigkeit) der resultierenden Positionsveränderungen Abstriche gemacht werden müssen. Dies liegt daran, dass bei Abbrems- und Beschleunigungsphasen bei geringen Positionsunterschieden große Unterschiede im Energieaufwand auftreten können. Demnach wird der klassischen mittleren Sollposition des Aktors (globale Aktorstellung) ein relatives zusätzliches Verstellmoment (relative Aktorvariation) aufgeprägt, um damit den Aktor einer weiteren relativen Beschleunigung und/oder Abbremsung auszusetzen, die zu einer Geschwindigkeitsvariation und damit zu einer Positionsveränderung des Aktors führt. Damit lassen sich die globale Einstellung des Aktors und die relative Variation des Aktors auch steuerungstechnisch besonders elegant überlagern.

In einer Weiterbildung des Verfahrens erfolgt die Ermittlung der relativen Aktorvariation unter Berücksichtigung wenigstens eines der folgenden Kriterien: Kosten der Aktorvariation, Nutzen der Aktorvariation, Grenzmoment und/der Stromaufnahme einer die Aktorvariation durchführenden Stelleinrichtung. Unter den Kosten der Aktorvariation sind in diesem Zusammenhang nicht nur die Mehrkosten einer zusätzlichen bzw. einer zusätzlich ertüchtigten Stelleinrichtung, sondern auch der erforderliche Energieaufwand zu verstehen, den die zusätzliche relative Aktorvariation erfordert.

Dem gegenüber gestellt wird der Nutzen der Aktorvariation, der sich letztlich in dem angestrebten reduzierten Verbrauch bzw. der gewünschten oder erforderlichen Reduzierung der Emissionen niederschlägt. Kosten und Nutzen der Aktorvariation können beispielsweise in normierbare Kostenfunktionen gegeneinander abgewogen werden. Solche Funktionen erlauben es auch, über die Nutzungsdauer eines Verbrennungsmotors bzw. eines Fahrzeugs auftretende "Preisveränderungen" zu berücksichtigen und so das Verfahren an sich ändernde Bedingungen anzupassen. "Preis-" bzw. "Kostenänderungen" können z.B. durch geänderte Emissions- bzw. Verbrauchsvorschriften verursacht werden.

Grenzmoment und/oder Stromaufnahme einer die Aktorvariation durchführenden Stelleinrichtung müssen selbstverständlich auch berücksichtigt werden, um die lebensdauerrelevanten Randbedingungen hinreichend berücksichtigen zu können.

Ein weiter gebildetes Verfahren, bei welchem die relative Aktorvariation unter Berücksichtigung einer aktuellen Winkelposition des Verbrennungsmotors erfolgt, erlaubt eine besonders einfach Synchronisierung mit dem Verbrennungstakt, da die Kurbelwellenstellung oder auch die Nockenwellenstellung eine erfasste und allzeit verfügbare Prozessgröße darstellt, über die jede Zylinderstellung ableitbar ist und die in engem Zusammenhang mit den zu verändernden globalen und lokalen Druckpulsationen steht.

In einer Weiterbildung des Verfahrens, bei dem zu jeder Winkelposition eine relative Aktorvariation und/oder ein relativer Aktorvariationsverlauf aus einem Speicher abrufbar ist, lassen sich die gewünschten Aktorvariationen bzw. Aktorvariationsverläufe nutzen, die in Simulationen, Versuchen oder aber auch Berechnungen gewonnen wurden und so über einen Speicher, beispielsweise einer Motorsteuereinheit verfügbar sind. Der Begriff "abrufbar" soll in diesem Zusammenhang nicht dahingehend eingeschränkt werden, dass nur solche Aktorvariationen bzw. Aktorvariationsverläufe nutzbar wären, die bereits fest im Speicher abgelegt sind, sondern der Begriff abrufbar soll auch solche Aktorvariationen bzw. Aktorvariationsverläufe umfassen, die beispielsweise während des Echtzeitbetriebes in einem geeigneten Motorsteuergerät in Abhängigkeit von Eingangssignalen unterschiedlichster Sensoren, von hinterlegten bzw. berechneten Kennfeldern und Betriebspunkten ermittelt und mit Hilfe geeigneter Algorithmen bestimmt werden. Typische Sensorsignale können beispielsweise Drücke und Temperaturen an unterschiedlichen Stellen im Frischluftsystem und/oder im Abgassystem sein sowie Temperaturen im Kühlsystem oder im Kraftstoffsystem bzw. im Ölkreislauf sowie weitere Abgas- und verbrauchsrelevante Signalgrößen.

In einer spezifischen Ausbildung des Verfahrens werden die Schritte ausgeführt:
Ermitteln einer aktuellen Winkelposition des Verbrennungsmotors, Auslesen einer relativen Aktorvariation und/oder eines relativen Aktorvariationsverlaufes aus dem Speicher und Überlagern der globalen Aktorstellung mit der relativen Aktorvariation und/oder des relativen Aktorvariationsverlaufes in Abhängigkeit von der aktuellen Winkelposition. Dieses Verfahren erlaubt eine besonders elegante Bestimmung und Realisierung der relativen Aktorvariation in Verbindung mit der globalen Aktorstellung.

Bei einer weiteren Verfeinerung des Verfahrens umfasst der Überlagerungsschritt Folgendes:
Umrechnen der relativen Aktorvariation und/oder des relativen Aktorvariationsverlaufes in eine Momentenänderung, Abgleichen der globalen Aktorstellung mit einer Ist-Position des Aktors und Bestimmung einer mittleren Momentenvorgabe, Addieren der Momentenänderung zur mittleren Momentenvorgabe und Ermitteln eines resultierenden Moments, Bestimmen eines Steuersignals aus dem resultierenden Moment und Übermitteln des Steuersignals an den Aktor bzw. eine Stelleinrichtung, welche den Aktor verstellt.

Dieses Verfahren umfasst eine Rückkopplung (Regelungsschleife) der Aktorstellung mit einer Ist-Position des Aktors (die ggf. gefiltert wird, um pulsationsbedingte Schwankungen auszugleichen), so dass nicht nur eine globale Soll-Aktorstellung zur Bestimmung eines resultierenden Momentes herangezogen wird, sondern eine um die Ist-Position korrigierte globale Aktorstellung als Grundlage dient. Das so bestimmte Steuersignal aus dem resultierenden Moment gewährleistet so die notwendige relative Aktorvariation mit minimalem Energieaufwand und damit zu minimalen "Kosten".

Ein Verbrennungsmotor, der mit einer Steuerung versehen ist, die dazu ausgebildet ist, das erfindungsgemäße Verfahren durchzuführen, erlaubt eine weitere Verbrauchs- und Emissionsoptimierung, ohne dass grundlegende Änderungen des Motorsystems erforderlich wären. Die Optimierungen können auch skalierbar durchgeführt werden, indem zunächst nur ein oder wenige wesentliche Aktoren für eine relative Aktorvariation vorgesehen oder ausgerüstet werden, z.B. beginnend mit der Drosselklappe. Dabei es ist auch möglich, über die Steuerung offenzuhalten, weitere Aktoren für die relative Aktorvariation vorzusehen, um für zukünftige Emissionsvorschriften zusätzliche Aktorvariationen realisierbar zu machen.

Ein Fahrzeug mit einem Verbrennungsmotor, der dazu ausgebildet ist, das erfindungsgemäße Verfahren durchzuführen, ist bei reduzierten Emissionen bzw. bei reduziertem Kraftstoffverbrauch zu betreiben.

Ausführungsbeispiele der Erfindung werden nun beispielhaft und unter Bezugnahme auf die beigefügte Zeichnung beschrieben. Darin zeigt:
- Fig. 1: eine schematische Darstellung eines Fahrzeugs mit einem Verbrennungsmotor und einer Steuerung, die dazu eingerichtet ist, das erfindungsgemäße Verfahren durchzuführen;
- Fig. 2: eine schematische Darstellung eines Ausführungsbeispiels eines erfindungsgemäßen Verfahrens,
- Fig. 3: zwei Diagramme, die den Zusammenhang zwischen einer relativen Aktorvariation der Drosselklappe und der Wirkung auf den Saugrohrdruckverlauf zeigen;
- Fig. 4: ein Diagramm, das den Zusammenhang zwischen der relativen Aktorvariation und einer zugehörigen Momentenvorgabe und
- Fig. 5: eine Darstellung der Basisschritte des erfindungsgemäßen Verfahrens.

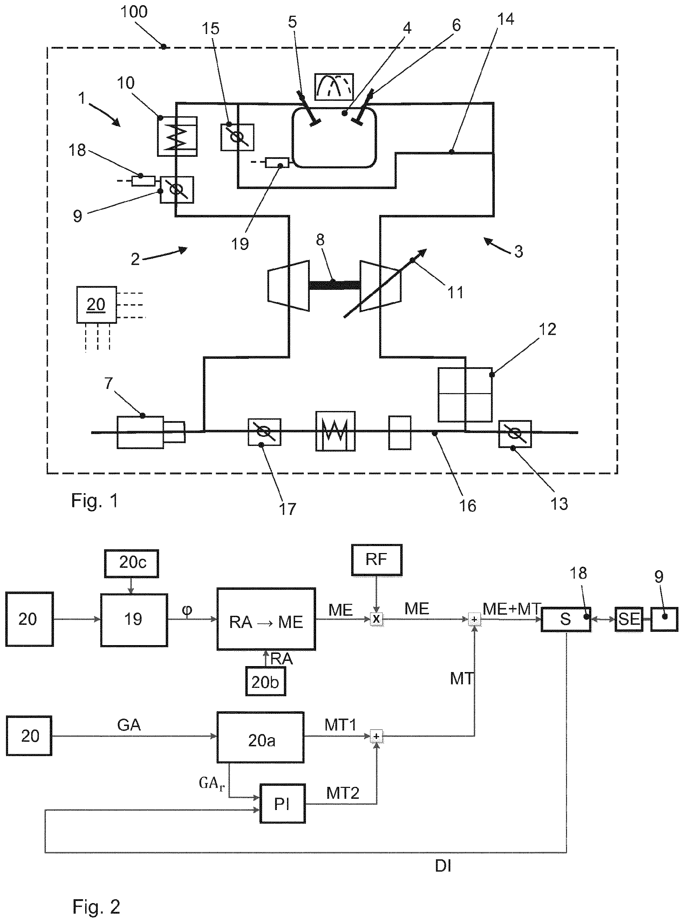

Die schematische Darstellung in Fig. 1 zeigt ein Fahrzeug 100 mit einem Verbrennungsmotor 1, der ein Frischluftsystem 2, ein Abgassystem 3 und einen oder mehrere Zylinder 4, denen über ein oder mehrere Einlassventile 5 Frischluft zugeführt wird und aus denen über ein oder mehrere Auslassventile 6 Abgas abgeführt wird. Der angesaugte Frischluftstrom durchläuft zunächst einen Luftfilter 7, wird in einem Verdichterteil eines Abgasturboladers 8 verdichtet. Die Zufuhr der Frischluft wird über die Drosselklappenanordnung 9 geregelt, die einen von mehreren peripheren Aktoren bildet, durchläuft einen Ladeluftkühler 10 und strömt durch ein Einlassventil 5 in den Zylinder 4.

Der Abgasstrom wird durch ein Auslassventil 6 aus dem Zylinder 4 ausgeschoben, treibt die Turbine des Abgasturboladers 8 an, die mit einer variablen Turbinengeometrie und damit mit einer VTG-Verstellung 11 versehen ist, die einen weiteren peripheren Aktor bildet. Der Abgasstrom durchläuft weiter eine Abgasaufbereitung 12 (Katalysator NSC, DPF, etc.) und verlässt durch eine Abgasklappenanordnung 13 das Abgassystem 3.

Frischluftsystem 2 und Abgassystem 3 sind zum einem primär über die Zylinder 4 mit den Einlass- und Auslassventilen 5 und 6 gekoppelt und sekundär über eine Hochdruckabgasrückführung 14 mit einem Hochdruckabgasrückführungsventil 15 und eine Niederdruckabgasrückführung 16 mit einem Niederdruckabgasrückführungsventil 17. Die Abgasklappenanordnung 13, das Hochdruckabgasrückführungsventil 15 und das Niederdruckabgasrückführungsventil 17 sowie die VTG-Verstellung 11 bilden ebenfalls periphere Aktoren, die über elektrisch ansteuerbare Stelleinrichtungen verstellbar, steuerbar oder aber regelbar sind.

Fig. 2 zeigt eine schematische Darstellung eines Ausführungsbeispiels eines erfindungsgemäßen Verfahrens, das in Verbindung mit der Drosselklappenanordnung durchgeführt wird. Zur Durchführung des Verfahrens sind Sensoren erforderlich, die ebenfalls in Fig. 1 dargestellt bzw. skizziert sind. Dazu gehören ein Drosselklappenstellungssensor 18, ein Kurbelwellenpositionsgeber19.

Optional können auch weitere Sensoren vorgesehen werden, die beispielsweise zur Steuerung der VTG-Verstellung 11 der Hochabgasrückführung 14, der Niederdruckabgasrückführung 16 und der Abgasklappenanordnung 13 nutzbar sind.

Alle diese Sensoren geben ihr Signal an ein Motorsteuergerät 20 ab.

Bei dem Verfahren, das in Fig. 2 angegeben ist, bestimmt die Motorsteuerung 20 eine gewünschte Drosselklappenstellung, die einer globalen Aktorstellung GA entspricht. In einem Bestimmungsglied 20a der Steuerung 20 wird dabei aus einer Reihe von Fahrzeug- und Betriebszustandsdaten, wie Beschleunigung, Geschwindigkeit, Reibung, Drehmoment, prognostizierter Stellungsverlauf und anderen, eine erreichbare Drosselklappenstellung GAᵣ ermittelt. Diese globale Aktorstellung GA wird in ein Drehmomentsignal MT1 umgerechnet und die erreichbare Drosselklappenstellung GAᵣ wird über eine vom Drosselklappenstellungssensor 18 ermittelte Ist-Stellung DI über ein PI-Element korrigiert und in ein Korrekturdrehmoment MT2 umgewandelt, welches das Drehmomentsignal MT1 korrigiert. Beide zusammen ergeben ein Drehmomentsignal MT, welches zur Einstellung der globalen Aktorstellung der Drosselklappe 9 dient, das Drehmomentsignal wird in einer Servoeinheit S in ein geeignetes Stromsignal umgewandelt, welches eine Stelleinrichtung SE (beispielsweise ein Elektromotor) der Drosselklappenanordnung ansteuert und die Drosselklappe eine gewünschte Stellung einnehmen lässt.

Zur Einstellung einer zusätzlichen relativen Aktorvariation RA (zusätzliche Verstellung der Drosselklappe) wird ein eingephastes Kurbelwellenstellungssignal abgegeben und in Abhängigkeit von der Kurbelwellenstellung und weitere Betriebsgrößen aus einem Kennfeld eine relative Aktorvariation RA bzw. ein relativer Aktorvariationsverlauf RA aus einem Speicherglied 20b der Steuerung 20 abgerufen und in eine Momentenänderung ME umgerechnet. Das Einphasen des Kurbelwellensignals zu einer Drosselklappenschwingung erfolgt über ein optionales Einphasungsglied 20c. Über eine optionale Rampenfunktion RF wird die Änderung ggf. dämpfend ein- bzw. ausgefast. Die Momentenänderung ME, die zu einer relativen Aktorvariation RA führen soll, wird zur mittleren Momentenvorgabe MT addiert, welches so beispielsweise mit einer Änderungsamplitude versehen wird, die dann wunschgemäß im Servo S zu einem entsprechenden elektrischen Signal führt, mit dem der Aktor, hier die Drosselklappe 9, angesteuert wird.

Diese Ansteuerungskonzept lässt sich auch auf andere Aktoren übertragen. Es ist auch möglich, das Ansteuerungskonzept an mehreren Aktoren gleichzeitig auszuführen und diese Ansteuerungskonzepte untereinander abzustimmen, so dass sehr feingliedrige ergänzende Motorabstimmungen hinsichtlich der Frischluft- und Abgasströme möglich sind.

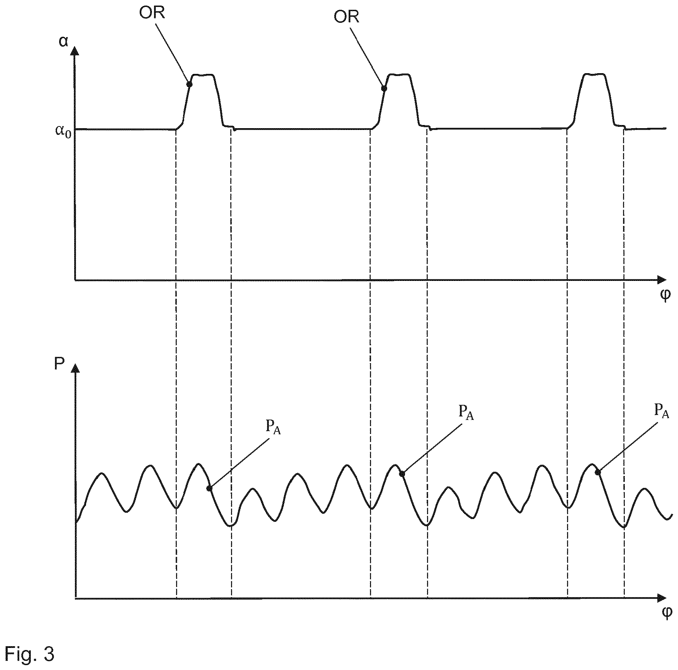

Die Kurvenverläufe in Fig. 3 zeigen in der oberen Kurve den Stellungsverlauf α einer Drosselklappe über den Kurbelwellenwinkelverlauf ϕ, bei der periodisch eine zusätzliche Öffnungsrampe OR eingefügt ist. Die Hauptstellung α₀ der Drosselklappe ändert sich über den Kurbelwellenwinkel ϕ nicht und die zusätzliche Öffnungsrampe wird periodisch dazwischen eingefügt. Dabei stellt die Hauptlinie die globale Aktorstellung α₀ da und die zwischengeschalteten Rampen OR die relativen Aktorvariationen.

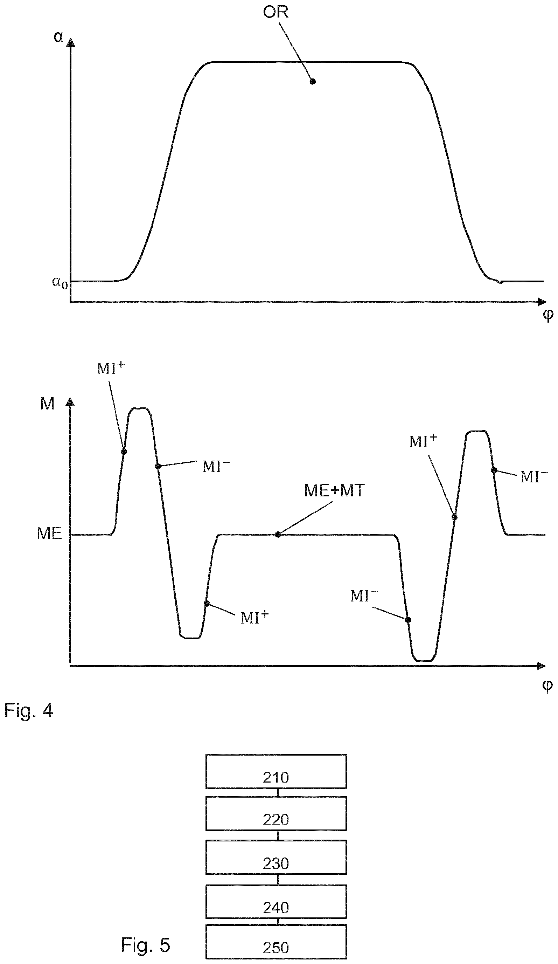

Das in Figur 2 dargestellte Schema umfasst die in Fig. 5 angegebenen Basisschritte des erfindungsgemäßen Verfahrens, insbesondere:
210 Erfassen eines Betriebszustands des Verbrennungsmotors (1)
220 Bestimmen einer globalen Aktorstellung (GA)
230 Einstellen der globalen Aktorstellung (GA)
240 Ermitteln einer relativen Aktorvariation (RA)
250 Verändern der globalen Aktorstellung (GA) um die relative Aktorvariation (RA),

In der darunter gestellten Kurve sind die Auswirkungen der relativen Aktorvariationen hinsichtlich des Druckverlaufes P im Ansaugrohr verstellbar. Die periodischen Pulsationen des Druckverlaufs zeigen jeweils im Bereich der relativen Aktorvariationen eine veränderte Druckabfallslinie PA. Dieser veränderte Druckabfall ist dazu nutzbar, den Druck und die Ansaugmasse in einem Zylinder 4 in der Ansaugphase zu verändern. Damit kann gezielt eine Gasmenge und/oder eine -zusammensetzung im Frischluftsystem verbrauchs- und/oder emissionsmindernd eingestellt werden. Die dazu optimale relative Aktorvariation RA wird dazu betriebspunktabhängig in Versuchen und/oder Simulationen bzw. durch Berechnungen ermittelt.

Fig. 4 zeigt, wie die relative Aktorvariation über eine Momentensignalveränderung realisiert wird. Dabei zeigt die obere Kurve im Detail den Verlauf der relativen Aktorvariation im Bereich der Öffnungsrampe OR und die untere Kurve den dazu erforderlichen Momentenverlauf. Die Kurven zeigen, dass für eine zusätzliche Öffnung nur relative kurze Momentenimpulse MI⁺ erforderlich sind, um zum einen die Drosselklappe 18 in Richtung zusätzlicher Öffnung zu beschleunigen und diese Öffnungsbewegung durch Gegenimpulse MI⁻ und MI⁺ wieder abzubremsen, zum Offenhalten ist kein weiteres Momentensignal erforderlich. Zum Wiederschließen ist wiederum ein Momentenimpuls MI⁻ in Richtung Klappe schließen erforderlich, und unmittelbar daran anschließend Gegensignale MI⁺ und MI⁻, um die Schließbewegung wieder zu stoppen.

Solche Momentimpulse MI⁺ und MI⁻ können sehr stromsparend und mit niedrigem Energieaufwand durchgeführt werden.

Über die Amplitude der Drehmomentimpulse kann die Geschwindigkeit der Stellungsänderung beliebig variiert werden. Das heißt, die Änderung kann entweder sehr weich (mit niedrigem Drehmomentimpulsen) oder auch relativ sprunghaft (mit hohen Drehmomentimpulsen) realisiert werden.

### Bezugszeichenliste

- 100: Fahrzeug
- 1: Verbrennungsmotor
- 2: Frischluftsystem
- 3: Abgassystem
- 4: Zylinder
- 5: Einlassventil
- 6: Auslassventil
- 7: Luftfilter
- 8: Abgasturbolader
- 9: Drosselklappenanordnung
- 10: Ladeluftkühler
- 11: VTG-Verstellung
- 12: Abgasaufbereitung
- 13: Abgasklappenanordnung
- 14: Hochdruckabgasrückführung
- 15: HP-AGR-Ventil
- 16: Niederdruckabgasrückführung
- 17: LP-AGR-Ventil
- 18: Drosselklappenstellungssensor
- 19: Kurbelwellenwinkelstellungssensor
- 20: Motorsteuerung
- 20a: Bestimmungsglied
- 20b: Speicherglied
- 20c: Einphasungsglied
- GA: globale Aktorstellung
- GA,: erreichbare Aktorstellung
- MT₁: Drehmomentsignal (GA)
- MT₂: Korrekturmoment
- SE: Stelleinrichtung
- S: Servoeinheit
- RA: relative Aktorvariation
- ME: Momentenänderung
- RF: Rampenfunktion
- MT: mittlere Momentenvergabe
- α: Drosselklappenstellungwinkel
- OR: Öffnungsrampe
- α₀: globale Aktorstellung (AR)
- P: Druckverlauf (Ansaugrohr)
- P_{A}: geänderte Druckabfallslinie
- MI⁺: Momentenimpuls
- MI⁻: Momentenimpuls
- 210: Erfassen eines Betriebszustands des Verbrennungsmotors
- 220: Bestimmen einer globalen Aktorstellung
- 230: Einstellen der globalen Aktorstellung
- 240: Ermitteln einer relativen Aktorvariation
- 250: Verändern der globalen Aktorstellung um die relative Aktorvariation

## Patentansprüche

1. Verfahren zum Betreiben eines Verbrennungsmotors (1), insbesondere eines Kraftfahrzeugs (100), mit mehreren Zylindern (4), einem Frischluftsystem (2) und einem Abgassystem (3), in denen im Betrieb Druckpulsationen auftreten und mit wenigstens einem peripheren Aktor (9, 11, 13, 15, 17) mit:
- Erfassen eines Betriebszustands des Verbrennungsmotors (1)
- Bestimmen einer globalen Aktorstellung (GA) für den peripheren Aktor (9, 11, 13, 15, 17) basierend auf dem erfassten Betriebszustand des Verbrennungsmotors (1)
- Einstellen der globalen Aktorstellung (GA)
- Ermitteln einer relativen Aktorvariation (RA) für den peripheren Aktor (9, 11, 13, 15, 17)
- Verändern der globalen Aktorstellung (GA) um die relative Aktorvariation (RA),
wobei die relative Aktorvariation (RA) verbrennungstaktsynchron derart erfolgt, dass eine mittels der relativen Aktorvariation (RA) bewirkte Veränderung der Druckpulsation eine Wunschgasmenge und/oder eine -zusammensetzung im Zylinder (4), im Frischluftsystem (2) und/oder im Abgassystem (3) verbrauchs- und/oder emissionsminimierend einstellt.

2. Verfahren nach Anspruch 1, wobei der wenigstens eine periphere Aktor einen der folgenden umfasst: Drosselklappe (9), Hochdruck-AGR-Ventil (15), Niederdruck-AGR-Ventil (17), VTG-Verstellung (11), Abgasklappe (13).

3. Verfahren nach Anspruch 1 oder 2, wobei die relative Aktorvariation (RA) einen relativen Sollverlauf umfasst, der mittels eines verbrennungstaktsynchronen Ansteuersignals, insbesondere ein Verstellmoments (ME, MI⁺, MI⁻), einstellbar ist.

4. Verfahren nach einem der Ansprüche 1 bis 3, wobei das Ermitteln der relativen Aktorvariation (RA) unter Berücksichtigung eines der folgenden Kriterien erfolgt: Kosten der Aktorvariation, Nutzen der Aktorvariation, Grenzmoment und/oder Stromaufnahme einer die Aktorvariation durchführenden Stelleinrichtung.

5. Verfahren nach einem der Ansprüche 1 bis 4, bei welchem die relative Aktorvariation (RA) unter Berücksichtigung einer aktuellen Winkelposition (ϕ) des Verbrennungsmotors erfolgt (1).

6. Verfahren nach einem der vorhergehenden Ansprüche, bei welchem zu jeder Winkelposition (ϕ) eine relative Aktorvariation (RA) und/oder ein relativer Aktorvariationsverlauf aus einem Speicher (20b) abrufbar ist.

7. Verfahren nach einem der Ansprüchen 1 bis 6 mit:
- Ermitteln einer aktuellen Winkelposition (ϕ) des Verbrennungsmotors (1)
- Auslesen einer relativen Aktorvariation (RA) und/oder eines relativer Aktorvariationsverlaufes (RA) aus einem Speicher (20b)
- Überlagern der globalen Aktorstellung (GA) mit der relativen Aktorvariation (RA) und/oder des relativen Aktorvariationsverlaufes.

8. Verfahren nach Anspruch 7, wobei das Überlagern der globalen Aktorstellung (GA) mit der relativen Aktorvariation und/oder des relativen Aktorvariationsverlaufes umfasst:
- Umrechnen relativen Aktorvariation (RA) und/oder des relativen Aktorvariationsverlaufes in eine Momentenänderung (ME, MI⁺, MI⁻)
- Abgleichen der globalen Aktorstellung (GA) mit einer Istposition (DI) des Aktors (9, 11, 13, 14, 17) und Bestimmen einer mittleren Momentenvorgabe (MT)
- Addieren der Momentenänderung (ME, MI⁺, MI⁻) zur mittleren Momentenvorgabe (MT) und Ermitteln eines resultierenden Moments (ME und MT)
- Bestimmen eines Steuersignals aus dem resultierenden Moment und
- Übermitteln des Steuersignals an den Aktor.

9. Verbrennungsmotor (1) mit einer Steuerung (20, 20a, 20b, 20c), die dazu ausgebildet ist das Verfahren nach einem der vorhergehenden Ansprüche durchzuführen.

10. Fahrzeug (100) mit einem Verbrennungsmotor (1) nach Anspruch 9.

## Claims

1. Method for operating an internal combustion engine (1), in particular of a motor vehicle (100), comprising a plurality of cylinders (4), a fresh air system (2) and an exhaust system (3), in which systems pressure pulsations occur during operation, and comprising at least one peripheral actuator (9, 11, 13, 15, 17), the method comprising:
- detecting an operating state of the internal combustion engine (1)
- determining a global actuator position (GA) for the peripheral actuator (9, 11, 13, 15, 17) on the basis of the detected operating state of the internal combustion engine (1)
- setting the global actuator position (GA)
- determining a relative actuator variation (RA) for the peripheral actuator (9, 11, 13, 15, 17)
- changing the global actuator position (GA) by the relative actuator variation (RA),
wherein the relative actuator variation (RA) is synchronized with the combustion cycle such that a change in the pressure pulsation brought about by means of the relative actuator variation (RA) sets a desired gas quantity and/or composition in the cylinder (4), in the fresh air system (2) and/or in the exhaust system (3) in a way that minimizes consumption and/or emissions.

2. Method according to claim 1, wherein the at least one peripheral actuator comprises one of the following: throttle valve (9), high pressure EGR valve (15), low pressure EGR valve (17), VTG adjuster (11), exhaust valve (13).

3. Method according to either claim 1 or 2, wherein the relative actuator variation (RA) comprises a relative target curve which can be set by means of a control signal synchronized with the combustion cycle, in particular an adjustment torque (ME, MI⁺, MI⁻).

4. Method according to any of claims 1 to 3, wherein the relative actuator variation (RA) is determined taking into account one of the following criteria: costs of the actuator variation, benefits of the actuator variation, limit torque and/or current consumption of a control device carrying out the actuator variation.

5. Method according to any of claims 1 to 4, in which the relative actuator variation (RA) takes place taking into account a current angular position (ϕ) of the internal combustion engine (1).

6. Method according to any of the preceding claims, in which, for each angular position (ϕ), a relative actuator variation (RA) and/or a relative actuator variation curve can be retrieved from a memory (20b).

7. Method according to any of claims 1 to 6, comprising:
- determining a current angular position (ϕ) of the internal combustion engine (1)
- reading out a relative actuator variation (RA) and/or a relative actuator variation curve (RA) from a memory (20b)
- overlaying the global actuator position (GA) with the relative actuator variation (RA) and/or the relative actuator variation curve.

8. Method according to claim 7, wherein the overlaying of the global actuator position (GA) with the relative actuator variation and/or the relative actuator variation curve comprises:
- converting relative actuator variation (RA) and/or the relative actuator variation curve into a torque change (ME, MI⁺, MI⁻)
- comparing the global actuator position (GA) with an actual position (DI) of the actuator (9, 11, 13, 14, 17) and determining an average torque specification (MT)
- adding the torque change (ME, MI⁺, MI⁻) to the average torque specification (MT) and determining a resulting torque (ME and MT)
- determining a control signal from the resulting torque and
- transmitting the control signal to the actuator.

9. Internal combustion engine (1) comprising a controller (20, 20a, 20b, 20c) which is designed to carry out the method according to any of the preceding claims.

10. Vehicle (100) comprising an internal combustion engine (1) according to claim 9.

## Revendications

1. Procédé permettant de faire fonctionner un moteur à combustion interne (1), en particulier un véhicule automobile (100), comportant plusieurs cylindres (4), un système à air frais (2) et un système d'échappement (3) dans lesquels apparaissent des pulsations de pression en fonctionnement et comportant au moins un actionneur périphérique (9, 11, 13, 15, 17), comportant :
- la détection d'un état de fonctionnement du moteur à combustion interne (1)
- la détermination d'une position d'actionneur globale (GA) pour l'actionneur périphérique (9, 11, 13, 15, 17) sur la base de l'état de fonctionnement détecté du moteur à combustion interne (1)
- le réglage de la position d'actionneur globale (GA)
- la définition d'une fluctuation d'actionneur relative (RA) pour l'actionneur périphérique (9, 11, 13, 15, 17)
- la modification de la position d'actionneur globale (GA) en fonction de la fluctuation d'actionneur relative (RA),
dans lequel la fluctuation d'actionneur relative (RA) est effectuée de manière synchrone avec le cycle de combustion de telle sorte qu'une modification de la pulsation de pression provoquée au moyen de la fluctuation d'actionneur relative (RA) règle une quantité et/ou une composition de gaz souhaitée dans le cylindre (4), dans le système à air frais (2) et/ou dans le système d'échappement (3) de manière à minimiser la consommation et/ou les émissions.

2. Procédé selon la revendication 1, dans lequel l'au moins un actionneur périphérique comprend l'un des éléments suivants : vanne papillon (9),
vanne EGR haute pression (15), vanne EGR basse pression (17), variation de la turbine à géométrie variable (11), clapet d'échappement (13).

3. Procédé selon la revendication 1 ou 2, dans lequel la fluctuation d'actionneur relative (RA) comprend une évolution de consigne relative qui peut être réglée au moyen d'un signal de commande synchrone avec le cycle de combustion, en particulier un couple de variation (ME, MI⁺, MI⁻).

4. Procédé selon l'une des revendications 1 à 3, dans lequel la définition de la fluctuation d'actionneur relative (RA) est effectuée en tenant compte de l'un des critères suivants : coût de la fluctuation d'actionneur, utilisation de la fluctuation d'actionneur, couple limite et/ou consommation de courant d'un dispositif de réglage mettant en oeuvre la fluctuation d'actionneur.

5. Procédé selon l'une des revendications 1 à 4, dans lequel la fluctuation d'actionneur relative (RA) est effectuée en tenant compte d'une position angulaire (ϕ) actuelle du moteur à combustion interne (1).

6. Procédé selon l'une des revendications précédentes, dans lequel, pour chaque position angulaire (ϕ), une fluctuation d'actionneur relative (RA) et/ou une évolution de fluctuation d'actionneur relative est disponible à partir d'une mémoire (20b).

7. Procédé selon l'une des revendications 1 à 6, comportant :
- la définition d'une position angulaire (ϕ) actuelle du moteur à combustion interne (1)
- la lecture d'une fluctuation d'actionneur relative (RA) et/ou d'une évolution de fluctuation d'actionneur relative (RA) à partir d'une mémoire (20b)
- la superposition de la position d'actionneur globale (GA) à la fluctuation d'actionneur relative (RA) et/ou à l'évolution de fluctuation d'actionneur relative.

8. Procédé selon la revendication 7, dans lequel la superposition de la position d'actionneur globale (GA) à la fluctuation d'actionneur relative et/ou de l'évolution de fluctuation d'actionneur relative comprend :
- la conversion de la fluctuation d'actionneur relative (RA) et/ou de l'évolution de fluctuation d'actionneur relative en une modification de couple (ME, MI⁺, MI⁻)
- l'ajustement de la position d'actionneur globale (GA) avec une position réelle (DI) de l'actionneur (9, 11, 13, 14, 17) et la détermination d'une consigne de couple moyenne (MT)
- l'ajout de la modification de couple (ME, MI⁺, MI⁻) à la consigne de couple moyenne (MT) et la définition d'un couple (ME et MT) résultant
- la détermination d'un signal de commande à partir du couple résultant et
- la transmission du signal de commande à l'actionneur.

9. Moteur à combustion interne (1) comportant une commande (20, 20a, 20b, 20c) qui est configurée pour mettre en oeuvre le procédé selon l'une des revendications précédentes.

10. Véhicule (100) comportant un moteur à combustion interne (1) selon la revendication 9.
